# EUROPÄISCHE PATENTSCHRIFT

(11) **EP 0 840 229 B1**
(45) Veröffentlichungstag und Bekanntmachung des Hinweises auf die Patenterteilung: **04.01.2006**
(21) Anmeldenummer: 97118976.6
(22) Anmeldetag: 30.10.1997
(51) Int. Cl.: G06F 12/06, G06F 7/02, H04L 29/12

(54) **Vorrichtung und Verfahren zur Selektion von Adressenwörtern**
Apparatus and method for selecting address words
Dispositif et méthode de sélection de mots d'adresse

(30) Priorität: 31.10.1996 DE 19645054
(43) Veröffentlichungstag der Anmeldung: 06.05.1998
(73) Patentinhaber: SGS-THOMSON MICROELECTRONICS GMBH, 85630 Grasbrunn (DE)
(72) Erfinder: Heinrich, Peter, 83533 Edling (DE)
(74) Vertreter: Hirsch, Peter

(56) Entgegenhaltungen:
- EP-A- 0 333 214
- EP-A- 0 663 635
- US-A- 5 568 647

## Beschreibung

Die Erfindung betrifft eine Vorrichtung und ein Verfahren zur Selektion von Adressenwörtern (wie im Dokument EP-A-0 663 635 beschrieben) die je n Bitstellen aufweisen und der Adressierung von m verschiedenen Empfangsstellen einer digitalen Nachrichtenübertragungseinrichtung dienen, in mindestens einer der Empfangsstellen. Die Vorrichtung umfaßt eine Akzeptanzeinrichtung, mittels welcher für die betrachtete Empfangsstelle akzeptierbare Adressenwörter selektierbar sind.

Es ist heutzutage üblich, bei einem System, das eine oder mehrere Sendestellen und mehrere Empfangsstellen aufweist, ein von einer Sendestelle ausgesendetes Signal an alle Empfangsstellen zu schicken, und zwar über einen gemeinsamen Übertragungskanal, beispielsweise in Form einer Busleitung. Damit die Möglichkeit besteht, von der Sendestelle Nachrichten nur an jeweils eine Empfangsstelle zu schicken, enthalten die von der Sendestelle gesendeten Signale jeweils zusätzlich zu der zu übertragenden Nachricht ein Adressenwort. Dabei ist jeder der Empfangsstellen mindestens ein für sie bestimmtes Adressenwort zugeordnet. Die einzelnen Empfangsstellen weisen Vorrichtungen zur Selektion der ihnen jeweils zugeordneten Adressenwörter auf. Daher kann diejenige Empfangsstelle, für welche die jeweils gesendete Nachricht bestimmt ist, solche Nachrichten aus dem Übertragungskanal entnehmen, welche mit einem für diese Empfangsstellen bestimmten oder akzeptierbaren Datenwort versehen sind.

Gehören zu einer Empfangsstelle mehrere Empfänger, kann man jedem dieser Empfänger ein eigenes Adressenwort zuordnen. Sollen bestimmte Nachrichten von mehreren Empfangsstellen empfangbar sein, kann man so vorgehen, daß jede dieser Empfangsstellen nicht nur ihr eigenes Adressenwort akzeptiert sondern auch weitere Adressenwörter. In diesen Fällen wird die Empfangsstelle so ausgelegt, daß sie mehrere Adressenwörter akzeptieren kann.

Für die Überprüfung, ob das Adressenwort der über den Übertragungskanal, beispielsweise die Busleitung, jeweils gesendeten Nachricht für eine bestimmte Empfangsstelle bestimmt ist oder nicht, wird in der Empfangsstelle das Adressenwort der jeweils gesendeten Nachricht auf Übereinstimmung mit dem dieser Empfangsstelle zugeordneten Adressenwort bzw. den dieser Empfangsstelle zugeordneten Adressenwörtern verglichen. Dies geschieht herkömmlicherweise mittels Filtern, die genauso , wie die Adressenwörter n Bitstellen aufweisen, in denen eine Bitfolge abgelegt ist, die der Bitfolge eines akzeptablen Adressenwortes entspricht. Soll die betrachtete Empfangstelle mehrere Adressenwörter akzeptieren können, benötigt sie soviele Filter mit je n Bistellen, wie Adressenwörter akzeptabel sein sollen. Das Adressenwort jeder der einzelnen Empfangsstelle angebotenen Nachricht wird mit jeder Bitfolge in jedem Filter dieser Empfangsstelle auf Übereinstimmung oder Nicht-Übereinstimmung verglichen. Besteht Übereinstimmung, wird das gerade empfangene Adressenwort akzeptiert und die diesem Adressenwort beigepackte Nachricht zu Verbrauchereinheiten dieser Empfangsstelle durchgelassen. Stimmt das gerade empfangene Adressenwort nicht mit der in einem der Filter abgelegten Bitfolge überein, wird dieses Adressenwort nicht akzeptiert und gelangt die diesem Adressenwort beigepackte Nachricht nicht zu Verbrauchereinheiten dieser Empfangsstelle.

Für den Vergleich, ob ein empfangenes Adressenwort mit der in dem Filter abgelegten Bitfolge übereinstimmt oder nicht, werden herkömmlicherweise XOR-Verknüpfungsschaltungen verwendet, und zwar pro Bitstelle von Adressenwort und Filter eine. Weist das Adressenwort beispielsweise acht Bitstellen auf, besitzt auch das Filter acht Bitstellen und sind für den Vergleich des jeweils empfangenen Adressenwortes mit der in dem Filter abgelegten Bitfolge acht XOR-Verknüpfungsschaltungen erforderlich. Die Ausgänge sämtlicher XOR-Verknüpfungsglieder werden auf ein ODER-Verknüpfungsglied gegeben, das soviele Eingänge aufweist, wie XOR-Verknüpfungsglieder vorhanden sind. An einem Ausgang des ODER-Verknüpfungsgliedes erscheint je nach dem, ob zwischen dem gerade empfangenen Adressenwort und dem in dem Filter abgelegten Wort Übereinstimmung besteht oder nicht, der Logikwert "0" oder der Logikwert "1". Der Logikwert "0" am Ausgang des ODER-Verknüpfungsgliedes bedeutet somit, daß das gerade empfangene Adressenwort von der betrachteten Empfangsstelle akzeptiert wird, während es nicht akzeptiert wird, wenn am Ausgang des ODER-Verknüpfungsgliedes der Logikwert "1" erscheint.

Bei der zuvor betrachteten herkömmlichen Lösung hat jedes der mehreren Filter einer Empfangsstelle eine Filterlänge gleich der Adressenwortlänge. Dies erfordert einerseits Hardware mit einer Kapazität, die man aus Kostengründen mitunter nicht bereitstellen möchte. Andererseits sind zwischen dem Adressenregister, in dem die Adresse für den Filtervergleich zwischengespeichert wird, den Filtern, den für den Vergleich verwendeten XOR-Verknüpfungsgliedern und dem diesen nachgeschalteten ODER-Verknüpfungsglied viele Wortleitungen erforderlich. Diese erfordern auf einem Chip einer monolithisch integrierten Halbleiterschaltung viel Platz. Auch XOR-Verknüpfungsglieder sind Schaltungsgruppen, die relativ viel Platz auf einem Halbleiterchip beanspruchen.

Der vorliegenden Erfindung liegt die Aufgabe zugrunde, den Schaltungsaufwand für die Akzeptanzprüfung von empfangenen Adressenwörtern zu reduzieren, insbesondere auf eine Weise, die zur Einsparung von Chipfläche führt.

Eine Lösung dieser Aufgabe besteht in einer Vorrichtung gemäß Anspruch 1 und in einem Verfahren gemäß Anspruch 11. Bevorzugte Ausführungsformen hiervon sind in den abhängigen Ansprüchen angegeben.

Die Erfindung schafft eine Vorrichtung, mittels welcher sich in einer Empfangsstelle einer digitalen Nachrichtenübertragungseinrichtung Adressenwörter selektieren lassen, die je n Bitstellen aufweisen und der Adressierung von m verschiedenen Empfangsstellen der Nachrichtenübertragungseinrichtung dienen. Die Vorrichtung umfaßt eine digitale Akzeptanzeinrichtung, mittels welcher für die betrachtete Empfangsstelle akzeptierbare Adressenwörter selektierbar sind. Die Akzeptanzeinrichtung weist auf:
- eine Adressenwortsegmentiereinrichtung, mittels welcher jedes von der Empfangsstelle empfangene Adressenwort in s Adressenwortsegmente mit je b Segmentbitstellen unterteilbar ist, wobei b = n/s und n ein ganzzahliges Vielfaches von s ist;
- z digitale Segmentfilter, deren Eingängen jeweils ein Adressenwortsegment zuführbar ist, wobei mittels eines jeden Segmentfilters jeweils ein Adressenwortsegment auf Übereinstimmung mit einem vorbestimmten Segmentbitmuster überprüfbar und am Ausgang des jeweiligen Segmentfilters ein Filterausgangssignal abnehmbar ist, bei dem es sich je nach dem Überprüfungsergebnis um ein Übereinstimmungssignal oder ein Nicht-Übereinstimmungssignal handelt;
- eine Aktivierungseinrichtung, mittels welcher während der Zeitdauer des jeweils zu bewertenden Adressenwortsegmentes diejenigen Segmentfilter aktivierbar sind, welche auf solche Segmentbitmuster überprüfen, welche in den für die betrachtete Empfangsstelle akzeptierbaren Adressenwörtern in dem jeweils zu bewertenden Adressenwortsegment vorkommen können;
- und eine Auswertungseinrichtung, mittels welcher die Ausgangssignale der für die Bewertung eines Adressenwortes jeweils aktivierten Segmentfilter hinsichtlich des Vorliegens eines für die betrachtete Empfangsstelle akzeptierbaren Adressenwortes auswertbar sind.

Möchte man bei der bekannten Akzeptanzprüfungsmethode für eine bestimmte Empfangsstelle beispielsweise vier verschiedene Adressenwörter akzeptieren, muß man in dieser Empfangsstelle vier Filter vorsehen, die je eine Filterlänge gleich der Adressenwortlänge aufweisen. Bei einer Adressenwortlänge von beispielsweise acht Bitstellen benötigt man in diesem Fall 32 Filterstellen. Hinzu kommt eine entsprechend große Anzahl von Wortleitungen mit entsprechend hohem Platzbedarf auf dem Halbleiterchip, auf dem sich die Adressenselektionsvorrichtung befindet.

Bei der erfindungsgemäßen segmentweisen Überprüfung der empfangenen Adressenwörter auf Akzeptanz kann man mit wesentlich weniger Filterstellen auskommen, insbesondere dann, wenn mehrere der zu akzeptierenden Adressenwörter in einem oder gar mehreren Adressenwortsegmenten ein gleiches Segmentbitmuster aufweisen. Für ein solches Adressenwortsegment brauchen entsprechend weniger Segmentfilter vorgesehen zu werden.

Bei einer ersten Ausführungsform der Erfindung sind s Segmentfiltergruppen mit je mindestens einem Segmentfilter vorgesehen, wobei die Anzahl der Segmentfilter pro Segmentfiltergruppe von der Anzahl der für das zugehörige Adressenwortsegment akzeptierbaren Segmentbitmuster abhängt,
jede Segmentfiltergruppe einem vorbestimmten Adressenwortsegment des jeweiligen Adressenwortes zugeordnet ist,
mittels der Aktivierungseinrichtung jeweils sämtliche Segmentfilter nur einer Segmentfiltergruppe gleichzeitig aktivierbar sind
und das jeweils zu überprüfende Adressenwortsegment den Eingängen aller Segmentfilter zuführbar ist.

Bei dieser Ausführungsform werden pro Adressenwortsegment nur soviele Segmentfilter benötigt, wie unterschiedliche Bitmuster in den jeweiligen Adressenwortsegmenten der für die betrachtete Empfangsstelle akzeptierbaren Adressenwörter vorkommen.

Mit noch weniger Segmentfiltern kommt man bei einer weiteren Ausführungsform der Erfindung aus, bei welcher das jeweils zu überprüfende Adressenwortsegment den Eingängen aller vorhandener Segmentfilter zuführbar ist und mittels der Aktivierungseinrichtung während des Auftretens eines zu überprüfenden Adressenwortsegmentes jeweils alle diejenigen Segmentfilter aller vorhandener Segmentfilter aktivierbar sind, welche auf das Auftreten von Segmentbitmustern überprüfen, die in dem jeweiligen Adressenwortsegment aller für die betrachtete Empfangsstelle akzeptierbarer Adressenwörter vorkommen können.

Bei dieser Ausführungsform braucht man insgesamt nur soviele Segmentfilter, wie Segmentbitmuster in allen Adressenwortsegmenten aller für die betrachtete Empfangsstelle akzeptierbaren Adressenwörter vorkommen können. Gegenüber der herkömmlichen Methode, bei welcher für jedes Adressenwort, das für eine Empfangsstelle akzeptierbar sein soll, je ein Filter mit der gesamten Adressenwortlänge erforderlich ist, führt die zuletzt betrachtete Ausführungsform der Erfindung zu einer ganz erheblichen Einsparung von Filterstellen und somit von Hardware. Außerdem führt diese Ausführungsform zu einer entsprechend starken Verringerung der insgesamt erforderlichen Wortleitungen, was zu einer beträchtlichen Einsparung an Chipfläche führt.

Eine weitere Einsparung an Filtern kann man dadurch erreichen, daß man mindestens einem Teil der Segmentfilter je eine Maske zuordnet, mittels welcher festgelegt werden kann, daß ein Teil der Bitstellen des zugehörigen Segmentfilters insofern ignoriert wird, als für diese Bitstelle eine Akzeptanz unabhängig davon erfolgt, ob das jeweils empfangene Adressenwort in der maskierten Bitstelle mit der entsprechenden Bitstelle des zugehörigen Segmentfilters übereinstimmt oder nicht. Mittels einer derartigen Maskierung, die an sich auch bereits bei herkömmlichen Filtern mit ganzer Adressenwortlänge angewendet worden ist, kann man bei der erfindungsgemäßen Methode zu einer noch weitergehenden Reduzierung der Anzahl erforderlicher Segmentfilter kommen.

Die Masken kann man mit Hilfe von Maskenregistern von b Bitspeicherstellen realisieren, die je einem Segmentfilter zugeordnet sind.

Bei einer bevorzugten Ausführungsform werden für die Überprüfung der einzelnen Adressenwortsegmente mit dem Inhalt der zugehörigen Segmentfilter in der bereits im Zusammenhang mit der herkömmlichen Akzeptanzprüfungsmethode erwähnten Weise XOR-Verknüpfungsglieder verwendet, deren Ausgangssignale auf Eingänge einer ODER-Verknüpfungsschaltung gegeben werden. Bei der XOR-Verknüpfung entsteht der Logikwert "1", wenn das Adressenbit von dem zugehörigen Filterbit abweicht, während ein Logikwert "0" entsteht, wenn das Adressenbit mit dem entsprechenden Filterbit übereinstimmt. Am Ausgang des ODER-Verknüpfungsgliedes tritt somit nur dann ein Logikwert "1" auf, wenn eines der XOR-Glieder einen Logikwert "1" aufweist und damit Nicht-Übereinstimmung zwischen dem jeweiligen Adressenbit und dem zugehörigen Filterbit signalisiert. Von einer Akzeptanz des jeweils empfangenen Adressenwortes wird daher nur dann ausgegangen, wenn am Ausgang des ODER-Gliedes der Logikwert "0" erscheint.

Bei Ausführungsformen mit Masken verknüpft man die Ausgangssignale der einzelnen XOR-Glieder mit dem Inhalt der einzelnen Maskenregister mittels UND-Gliedern, deren Ausgangssignale an die Eingänge des ODER-Gliedes gegeben werden. Soll eine bestimmte Filterbitstelle nicht ignoriert werden, enthält die zugehörige Maskenregisterstelle den Logikwert "1". An den entsprechenden Eingang des ODER-Gliedes wird daher nur dann der auf Akzeptanz hinweisende Logikwert "0" gegeben, wenn das betrachtete Adressenbit mit dem zugehörigen Filterbit übereinStimmt. Soll die entsprechende Adressenbitstelle hinsichtlich Übereinstimmung oder Nicht-Übereinstimmung mit dem entsprechenden Filterbit ignoriert werden, enthält die zugehörige Maskenregisterstelle den Logikwert "0" , so daß am Ausgang des entsprechenden UND-Gliedes unabhängig vom jeweiligen Bitwert der zugehörigen Adressenbitstelle immer der Logikwert "0" geliefert wird, also der Akzeptanz signalisierende Logikwert.

Bei dem erfindungsgemäßen Verfahren zur Selektion von Adressenwörtern in mindestens einer der Empfangsstellen wird jedes Adressenwort in s Adressenwortsegmente unterteilt, werden die einzelnen Adressenwortsegmente je darauf überprüft, ob sie mit einem Segmentbitmuster, das in dem jeweiligen Adressenwortsegment eines der für die betrachtete Empfangsstelle akzeptierbaren Adressenwörter vorkommen kann, übereinstimmen, und wird nach Überprüfung aller Adressenwortsegmente anhand der Überprüfungsergebnisse für die einzelnen Adressenwortsegmente eine Bewertung dahingehend durchgeführt, ob es sich bei dem jeweils empfangenen Adressenwort um ein für die betrachtete Empfangsstelle akzeptierbares Adressenwort handelt oder nicht.

Dabei können einzelne Bits des Segmentbitmusters in der bereits erwähnten, Weise maskiert werden.

Die Erfindung wird nun anhand von Ausführungsformen näher erläutert. In den Zeichnungen zeigen:
- **Fig. 1**: eine erste Ausführungsform einer erfindungsgemäßen Selektionsvorrichtung;
- **Fig. 1a**: eine Schaltungsvorrichtung für eine parallele Akzeptanzüberprüfungsauswertung;
- **Fig. 1b**: eine Schaltungsvorrichtung für eine sequentielle Akzeptanzüberprüfungsauswertung;
- **Fig. 2**: ein Beispiel für akzeptierbare Adressenwörter, die in Adressenwortsegmente unterteilt sind;
- **Fig. 3 - 6**: Darstellungen der Adressenwortliste gemäß Fig. 2, jedoch mit Kennzeichnung von Segmenten mit gleichem Bitstelleninhalt;
- **Fig. 7**: eine zweite Ausführungsform einer erfindungsgemäßen Selektionsvorrichtung;
- **Fig. 8**: eine dritte Ausführungsform einer erfindungsgemäßen Selektionsvorrichtung;
- **Fig. 9**: eine erste Ausführungsform einer Schaltungsanordnung mit Logik-Verknüpfungselementen;
- **Fig. 10**: eine schematische generelle Darstellung eines Übertragungskanals mit einer Sendestelle und mehreren Empfangsstellen an sich bekannter Art;
- **FIG. 11**: eine Darstellung einer der Empfangsstellen in Fig. 10;

- **Fig. 12**: ein Beispiel für vier von einer Empfangsstelle akzeptierbare Adressenwörter; und
- **Fig. 13**: eine Filterschaltng herkömmlicher Art.

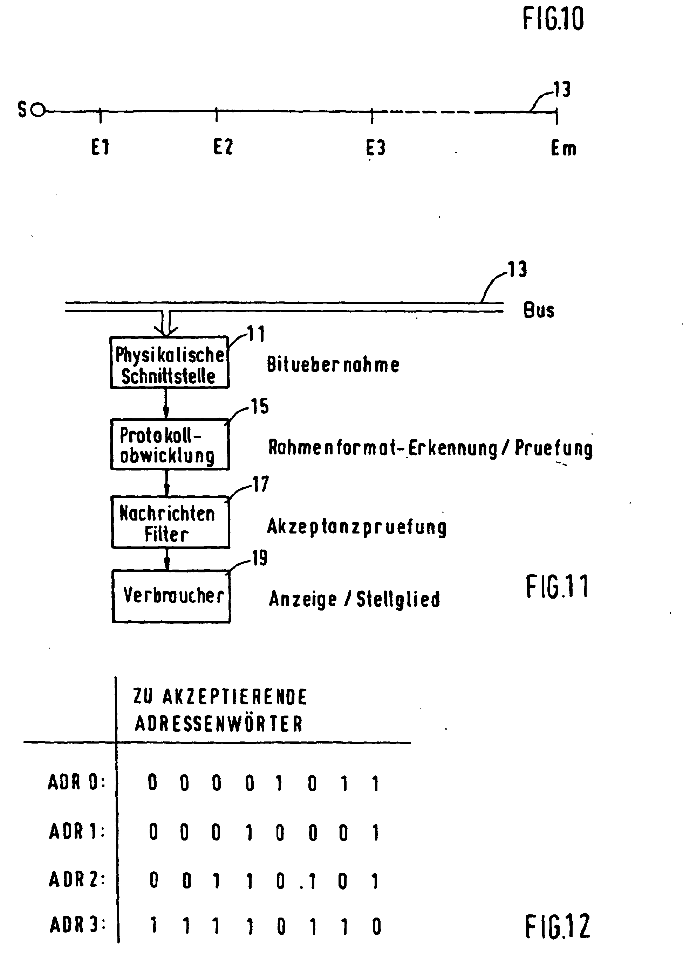

Fig. 10 zeigt in schematisierter Darstellung eine an sich bekannte Nachrichtenübertragungseinrichtung mit einem Sender S, mehreren Empfangsstellen E1, E2, E3 ... Em und einem Bus, mittels welchem der Sender S und die Empfangsstellen E1 ..' Em in Reihen- oder in Ringschaltung miteinander verbunden sind. Eine vom Sender S über den Bus übertragene Nachricht gelangt daher an alle Empfangsstellen E1 ... Em. Damit eine vom Sender S gesendete Nachricht selektiv an einzelne Empfangsstellen geschickt werden kann, enthält die ausgesendete Nachricht nicht nur ein aus mehreren Bits zusammengesetztes Nachrichtenwort sondern ' zusätzlich ein aus einer Anzahl von Bits zusammengesetztes Adressenwort. Jede Empfangsvorrichtung enthält eine Vorrichtung zur Überprüfung, ob das Adressenwort der jeweils gesendeten Nachricht für die jeweilige Empfangsstelle akzeptierbar ist oder nicht. Im Fall der Akzeptanz wird die mit diesem Adressenwort verknüpfte Nachricht von der akzeptierenden Empfangsstelle übernommen.

FIG. 11 zeigt in schematischer Darstellung den an sich bekannten Aufbau einer der Empfangsstellen E1 ... Em. Eine solche Empfangsstelle besitzt eine physikalische Schnittstelle 11, mittels welcher eine Bitübernahme der über einen Bus 13 übertragenen Bitfolge durchgeführt wird. Das Ausgangssignal der physikalischen Schnittstelle 11 wird auf eine sogenannte Protokollabwicklung 15 gegeben, mittels welcher eine Rahmenformat-Erkennung und Rahmenformat-Prüfung durchgeführt wird. An den Ausgang der Protokollabwicklung 15 schließt sich ein Nachrichtenfilter 17 an, mit dem eine Akzeptanzprüfung durchgeführt wird, also eine Prüfung, ob das jeweils übertragene Adressenwort von der betrachteten Empfangsstelle akzeptiert wird oder nicht. Bei Akzeptanz wird die mit dem akzeptierten Adressenwort übertragene Nachricht an einen Verbraucher 19 weitergegeben, bei dem es sich um eine Anzeigevorrichtung, ein Stellglied oder ähnliches handeln kann. Der in FIG. 11 gezeigte Schaltungsaufbau ist an sich bekannt. Die vorliegende Erfmdung bezieht sich auf eine Verbesserung des Nachrichtenfilters 17.

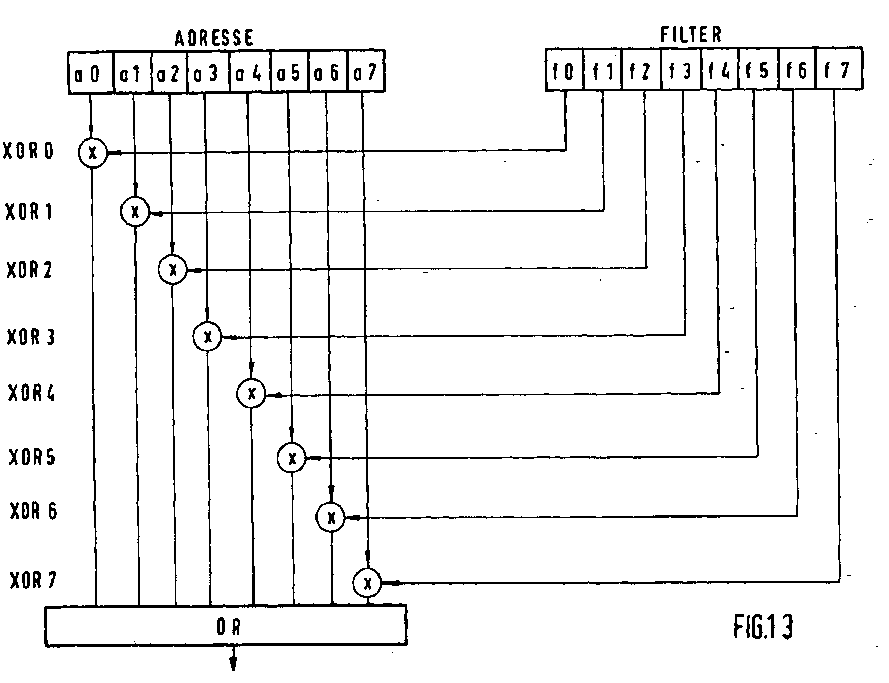

Fig. 12 zeigt ein Beispiel von vier Adressenwörtern ADR0, ADR1, ADR2 und ADR3, die von einer bestimmten Empfangsstelle akzeptiert werden sollen. Fig. 13 zeigt eine praktische Realisierung einer Akzeptanzüberprüfungseinrichtung, wenn es nur ein akzeptierbares Adressenwort gibt und daher nur ein einziges Filter benötigt wird. Bei Anwendung herkömmlicher Nachrichtenfilter zur Akzeptanzüberprüfung von vier Adressenwörtern wären vier Filter mit je acht Filterbitstellen erforderlich, um zu überprüfen, ob es sich bei dem jeweils übertragenen Datenwort um eines der vier akzeptierbaren Datenwörter oder um ein nicht-akzeptierbares sonstiges Datenwort handelt. Es wären also vier Filter mit insgesamt 32 Filterstellen erforderlich. Außerdem wird eine entsprechend große Anzahl von Wortleitungen auf dem Halbleiterchip benötigt, in dem diese Empfangsstelle monolithisch integriert ist.

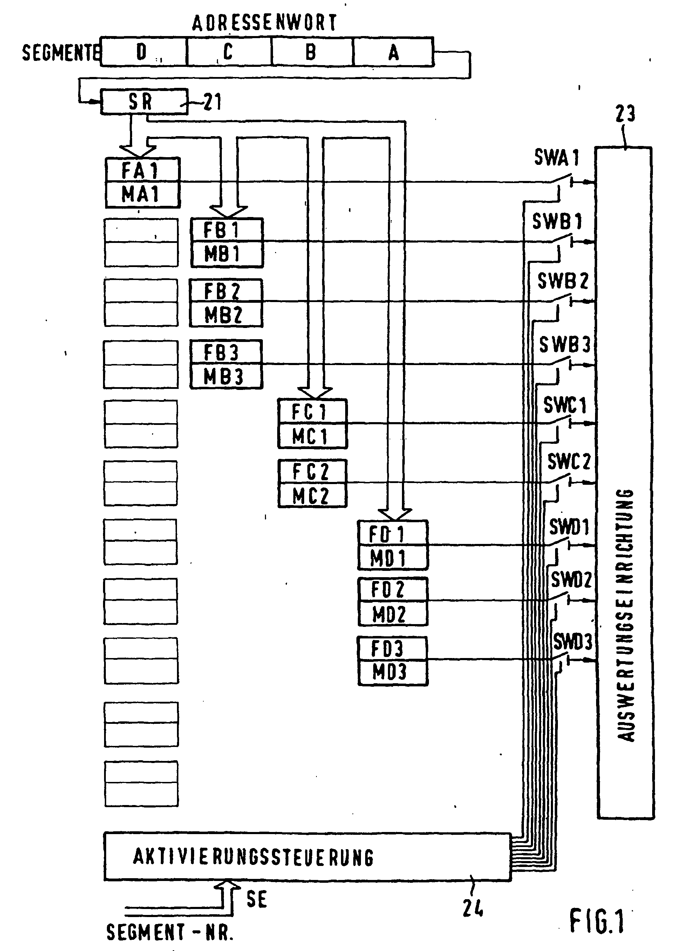

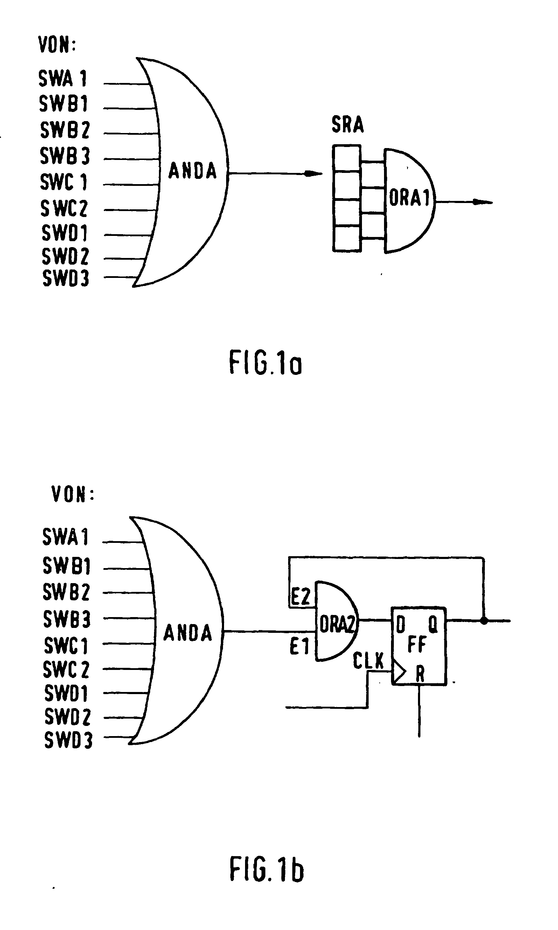

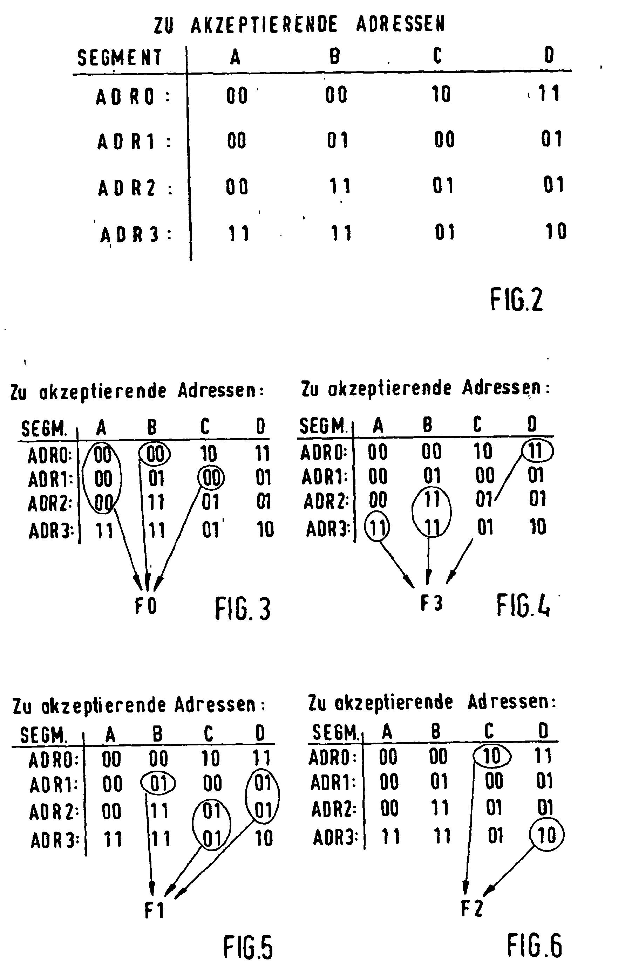

Eine erste Ausführungsform einer erfindungsgemäßen Vorrichtung zur Akzeptanzprüfung oder Selektion von Adressenwörtern ist in Fig. 1 in schematischer Blockdarstellung gezeigt. Bei dieser Ausführungsform ist davon ausgegangen, daß ein Adressenwort vorliegt, das in vier Adressenwortsegmente (im folgenden auch kurz Segmente genannt) A, B, C und D unterteilt ist. Bei der in Fig. 1 dargestellten Ausführungsform wird ein Schieberegister 21 verwendet, das nur soviele Registerstellen aufweist, wie ein Adresssenwortsegment Bits enthält. Dabei werden die einzelnen Segmente A, B, C und D des oberhalb des Schieberegisters 21 dargestellten Adressenwortes nacheinander in dieses Schieberegister 21 eingespeichert und wird die Akzeptanzüberprüfung für das jeweils im Schieberegister befindliche Segment durchgeführt.

Für die in Fig. 1 gezeigte Ausführungsform wird weiterhin davon ausgegangen, daß jedes Adressenwort aus acht Bitstellen besteht, jedes Segment zwei Bitstellen aufweist und die betrachtete Empfangsstelle vier Adressenwörter akzeptieren soll, wie sie in der in Fig. 2 gezeigten Tabelle als Beispiel angegeben sind. Bei der Ausführungsform nach Fig. 1 sind nicht nur Filter vorhanden sondern auch Masken, welche die Möglichkeit geben, einzelne Bitstellen in den einzelnen Segmenten insofern zu maskieren, als für die entsprechende Bitstelle Akzeptanz signalisiert wird, unabhängig davon, ob der Binärwert dieser Bitstelle des Adressenwortes mit dem Binärwert der entsprechenden Filterstelle übereinstimmt oder nicht.

Bei der in Fig. 1 vorgesehenen Ausführungsform sind vier Filtergruppen vorgesehen, die je einem der vier Segmente A bis D zugeordnet sind. Die Segment A zugeordnete Filtergruppe besteht aus einem Filter FA1 und einer Maske MA1. Zum Segment B gehört eine Filtergruppe mit drei Filtern FB1, FB2, FB3, denen je eine Maske MB1, MB2 bzw. MB3 zugeordnet ist. Zum Segment C gehört eine Filtergruppe mit zwei Filtern FC1 und FC2, denen je eine Maske MC1 bzw. MC2 zugeordnet ist. Zum Segment D gehört eine Filtergruppe mit drei Filtern FD1, FD2 und FD3, denen je eine Maske MD1, MD2 bzw. MD3 zugeordnet ist.

Mit den in Fig. 1 gezeigten Filtern und Masken müssen die vier in Fig. 2 als Beispiel gezeigten Adressenwörter auf Akzeptierbarkeit überprüft werden. Wie Fig. 2 zeigt, weisen die Segmente A aller vier akzeptierbarer Adressenwörter ADR0 bis ADR3 nur zwei verschiedene Bitmuster auf, nämlich "00" und "11". Wären keine Masken vorhanden, müßte die zum Segment A gehörende Filtergruppe zwei Filter aufweisen, von denen eines auf das Vorliegen der Bitkombination "00" und die andere auf das Vorliegen der Bitkombination "11" überprüft. Bei der Ausführungsform der Fig. 1 ist die Maske MA1 derart ausgelegt, daß sie beide Bitstellen des Segments A ignoriert, also für beide Bitstellen unabhängig vom Binärwert Akzeptanz signalisiert.

Die zu Segment B gehörende Filtergruppe enthält drei Filter, also soviele Filter, wie im Segment B aller vier akzeptierbarer Adressenwörter Bitmuster vorkommen können, nämlich die Bitmuster "00", "01" und "11". Da soviele Filter vorhanden sind wie mögliche Bitmuster, sind in der zu Segment B gehörenden Filtergruppe alle drei Masken derart ausgelegt, daß sie keine der beiden Bitstellen des Segments B ignorieren sondern Akzeptanz nur dann signalisieren, wenn die beiden Bitstellen des Segmentes B des jeweils empfangenen Adressenwortes exakt mit dem Bitmuster eines der drei Filter FB1, FB2 und FB3 übereinstimmen.

Segment C sind zwei Filter und zwei Masken zugeordnet. Da im Segment C der vier akzeptablen Adressenwörter drei verschiedene Bitmuster vorkommen, nämlich "10", "00" und "01", aber nur zwei Filter vorhanden sind, ist eine der Masken MC1 und MC2 derart ausgelegt, daß sie keine der beiden Bitstellen des zugehörigen Filters ignoriert, während die andere Maske eine der Bitstellen des zugehörigen Filters ignoriert. Beispielsweise kann Filter FC1 den Filterinhalt "10" haben und das zweite Filter den Filterinhalt "00". In diesem Fall würde die dem erstgenannten Filter zugeordnete Maske keine Bitstelle ignorieren, während die dem zweitgenannten Filter zugeordnete Maske die erste Bitstelle nicht ignorieren, die zweite Bitstelle dagegen ignorieren würde.

Da im Segment D aller vier akzeptabler Adressenwörter drei verschiedene Bitmuster vorkommen, nämlich "11", "01" und "10", und da die Segment D zugeordnete Filtergruppe drei Filter FD1, FD2 und FD3 umfaßt, sind die je zugehörigen Masken MD1, MD2 bzw. MD3 je so ausgelegt, daß sie keine der beiden Bitstellen des zugehörigen Filters ignorieren.

Der Ausgang einer jeden Filter/Masken-Einheit ist über einen Schalter mit je einem zugeordneten Eingang einer Auswertungseinrichtung 23 verbunden. Dabei gehört zu jeder Filtergruppe eine Schaltergruppe. Zur zu Segment A gehörenden ersten Filtergruppe mit der Filter/Masken-Einheit FA1/MA1 gehört ein erster Schalter SWA1. Zur zweiten Filtergruppe mit den Filter/Masken-Einheiten FB1/MB1, FB2/MB2 und FB3/MB3 gehört eine Schaltergruppe SWB1, SWB2 und SWB3. Zur Filtergruppe mit den Filter/Masken-Einheiten FC1/MC1 und FC2/MC2 gehört eine Schaltergruppe SWC1 und SWC2. Zur Filtergruppe mit den Filter/Masken-Einheiten FD1/MD1, FD2/MD2 und FD3/MD3 gehört eine Schaltergruppe SWD1, SWD2 und SWD3.

Die Bits des jeweils in das Schieberegister 21 geschobenen Adressenwortsegmentes werden den Eingängen sämtlicher Filter FA1 bis FD3 gleichzeitig angeboten. Die Filter/Masken-Einheiten der für das jeweilige Segment jeweils zuständige Filtergruppe sind mit Hilfe einer Aktivierungssteuerung 24 jeweils aktivierbar, indem, über die Aktivierungssteuerung 24 die zugehörigen Schalter leitend geschaltet werden.

In Fig. 1 sind unter der Filter/Masken-Einheit FA1/MA1 weitere Filter/Masken-Einheiten mit punktierten Linien angedeutet. Damit soll zum Ausdruck gebracht werden, daß in der integrierten Schaltung, in welcher die erfindungsgemäße Selektionseinrichtung untergebracht ist, in einer (in Fig. 1 unterhalb des Schieberegisters angeordneten) Reihe ein Vorrat an Filter/Masken-Einheiten vorgesehen ist und davon die für die spezielle Selektionseinrichtung erforderliche Anzahl von Filter/Masken-Einheiten belegt und gruppenweise den einzelnen Adressenwortsegmenten zugeordnet wird.

Bei der in Fig. 1 dargestellten Ausführungsform wird unter der Fig. 2 entsprechenden Annahme, daß jedes Adressenwortsegment zwei Bitstellen hat, ein Schieberegister 21 mit zwei Registerstellen verwendet. Von dem auf Akzeptanz zu untersuchende Adressenwort werden daher der Reihe nach je zwei Bit in das Schieberegister 21 geschoben und wird am Ende des Einschiebens des Bit-Paares des jeweiligen Segmentes die Auswertung für das jeweilige Segment vorgenommen.

Mittels der Aktivierungssteuerung 24 werden nacheinander die zu den einzelnen Segmenten A, B, C und D gehörenden Filtergruppen aktiviert, indem während eines jeden Segmentes sämtliche zur zugehörigen Segmentfiltergruppe gehörenden Schalter leitend geschaltet werden. Zu diesem Zweck wird die Aktivierungssteuerung 24 über einen Steuereingang SE über die Nummer des jeweils überprüften Segmentes informiert, um die jeweils zugehörige Schaltergruppe leitend zu schalten. Bei dieser Funktionsweise wertet die Auswertungseinrichtung 23 die Überprüfungsergebnissignale, die sie während eines jeden Segmentes von der jeweils aktivierten Filtergruppe erhält, für die Beurteilung aus, ob ein akzeptierbares Adressenwort empfangen worden ist oder nicht, und gegebenenfalls welches der vier akzeptierbaren Adressenwörter empfangen ist.

Die Auswertungseinrichtung 24 führt entweder eine parallele Auswertung am Ende der Akzeptanzüberprüfung des letzten Segmentes des jeweiligen Adressenwortes durch oder eine sequentielle Auswertung am Ende der Akzeptanzüberprüfung eines jeden Segmentes. Schaltungsbeispiele hierfür sind in den Figuren 1a bzw. 1b gezeigt.

Die in Fig. 1a gezeigte Ausführungsform für eine parallele Akzeptanzüberprüfungsauswertung umfaßt eine Auswertungs-UND-Verknüpfungsschaltung ANDA, die für jeden der Schalter SWA1 bis SWD3 einen mit dem jeweiligen Schalter verbundenen Eingang aufweist. Ein Ausgang von ANDA ist mit einem Eingang eines Auswertungsschieberegisters SRA verbunden, das pro Adressenwortsegment eine Registerstelle aufweist, bei dem betrachteten Beispiel also vier. Jede Registerstelle weist einen Registerstellenausgang auf. Dem Auswertungsschieberegister SRA folgt eine Auswertungs-ODER-Verknüpfungssehaltung ORA1, die pro Adressenwortsegment einen Eingang aufweist, wobei jeder dieser Eingänge mit einem der Registerstellenausgänge verbunden ist. An einem Ausgang von ORA1 ist das Akzeptanzüberprüfungsauswertungsergebnis für das jeweilige Adressenwort abnehmbar.

Eine Selektionsvorrichtung der in Fig. 1 gezeigten Art mit einer parallel arbeitenden Auswertungseinrichtung nach Fig. 1a funktioniert folgendermaßen:

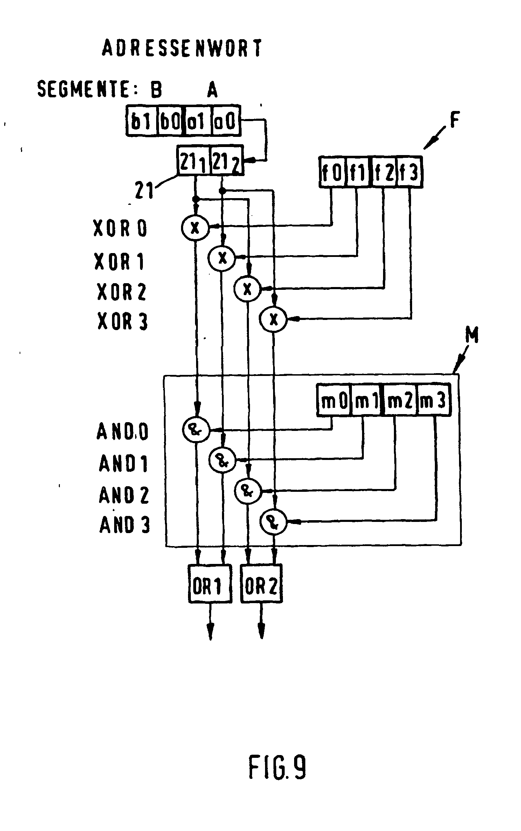

Jeder der Schalter SWA1 bis SWD3 liefert dann, wenn er von der Aktivierungssteuerung 24 nichtleitend gesteuert ist, an die Auswertungseinrichtung 23 den Logikwert "1". Jede der Filter/Masken-Einheiten FA1/MA1 bis FD3/MD3, deren Funktionsweise weiter unten anhand von Fig. 9 noch ausführlicher erläutert werden wird, liefert an ihrem Ausgang je nach dem, ob sie ein von ihr überprüftes Segment als akzeptabel oder nicht akzeptabel bewertet, einen Logikwert "0" oder einen Logikwert "1". Ein Eingang von ANDA erhält daher den Logikwert "0" nur dann, wenn der zugehörige der Schalter SWA1 bis SWD3 leitend gesteuert ist und die mit diesem Schalter verbundene Filter/Masken-Einheit das jeweilige Adressenwortsegment als akzeptabel erkennt. Signalisieren alle jeweils aktivierten Filter/Masken-Einheiten durch Abgabe des Logikwertes "1" Nicht-Akzeptanz, erhalten alle Eingänge von ANDA den Logikwert "1" und erscheint am Ausgang von ANDA der Logikwert "1". Signalisiert eine der jeweils aktivierten Filter/Masken-Einheiten Akzeptanz durch Abgabe des Logikwertes "0", erhält der entsprechende Eingang von ANDA diesen Logikwert "0" und erscheint am Ausgang von ANDA der Logikwert "0" . Je nach dem, ob ein Segment als akzeptabel oder als nicht akzeptabel bewertet wird, erscheint somit am Ausgang von ANDA der Logikwert "0" oder der Logikwert "1". Dieser wird in das Auswertungsschieberegister SRA mit dem gleichen Taktsignal eingeschoben, mit welchem die einzelnen Adressenwortsegmente in das Schieberegister 21 geschoben werden. Am Ende des zu überprüfenden Adressenwortes befinden sich im Auswertungsschieberegister vier Segmentbewertungs-Bits, die über ORA1 einer ODER-Verknüpfung unterzogen werden. Nur wenn am Ende des jeweiligen Adressenwortes in allen vier Registerstellen von SRA der Logikwert "0" gespeichert ist, erscheint am Ausgang von ORA1 der Logikwert "0", wodurch Akzeptanz des überprüften Adressenwortes angezeigt wird. Erscheint am Ausgang von ORA1 dagegen der Logikwert "1", ist dies der Hinweis, daß das überprüfte Adressenwort in mindestens einem Segment nicht akzeptiert worden ist, somit kein akzeptierbares Adressenwort ist.

Die in Fig. 1b gezeigte Ausführungsform für eine sequentielle Akzeptanzübetprüfungsauswertung umfaßt ebenfalls eine Auswertungs-UND-Verknüpfungsschaltung ANDA, die genauso wie Fig. 1a für jeden der Schalter SWA1 bis SWD3 einen mit dem jeweiligen Schalter verbundenen Eingang aufweist. Im Fall von Fig. 1b ist der Ausgang von ANDA jedoch mit einem ersten Eingang E1 einer zwei Eingänge E1 und E2 aufweisenden Auswertungs-ODER-Verknüpfungsschaltung ORA2 verbunden. ORA2 ist ein getaktetes RS-Flipflop FF nachgeschaltet, das einen mit einem Ausgang von ORA2 verbundenen Setz-Eingang S, einen Takteingang CLK, einen Rücksetzeingang R und einen nicht invertierenden Q-Ausgang aufweist. Der Takteingang CLK erhält das Schiebetaktsignal, das auch dem Segmentschieberegister 21 zugeführt wird. Das Takten von FF geschieht beispielsweise mit den ansteigenden Flanken des rechteckigen Schiebetaktsignals. Der Q-Ausgang, an dem das Akzeptanzauswertungssignal der Auswertungseinrichtung abnehmbar ist, ist mit dem zweiten Eingang E2 von ORA2 verbunden. Dem Rücksetz-Eingang R wird vor der Akzeptanzüberprüfung eines Adressenwortes ein Rücksetzsignal zugeführt, welches am Q-Ausgang einen Logikwert "0" hervorruft, also einen Akzeptanz signalisierenden Logikwert.

Eine Selektionsvorrichtung der in Fig. 1 gezeigten Art mit einer sequentiell arbeitenden Auswertungseinrichtung nach Fig. 1b funktioniert folgendermaßen:

Wie bei Fig. 1a erscheint je nach dem, ob ein Segment als akzeptabel oder als nicht akzeptabel bewertet wird, am Ausgang von ANDA der Logikwert "0" oder der Logikwert "1". Werden von den Filter/Masken-Einheiten alle Segmente des zu überprüfenden Adressenwortes akzeptiert, erscheint am Ende der Überprüfung des letzten Segmentes dieses Adressenwortes am Ausgang von ANDA eine Sequenz von vier Logikwerten "0" . Bei der Überprüfung eines nicht akzeptierbaren Adressenwortes weist diese Sequenz an mindestens einer Stelle den Logikwert "1" auf. Solange nach dem Rücksetzen des FF der Q-Ausgang den Logikwert "0" aufweist und nur akzeptierbare Adressenwortsegmente festgestellt werden und daher am Ausgang von ANDA nur Logikwerte "0" erscheinen, bleibt der Q-Ausgang auf dem Akzeptanz anzeigenden Logikwert "0,". Sobald ein Adressenwortsegment als nicht akzeptierbar bewertet wird und daher am Ausgang von ANDA der Logikwert "1" erscheint, springt der Q-Ausgang des FF beim nächsten Taktimpuls an seinem Takteingang CLK auf den Logikwert "1" um. Dieser wird über ORA2 auf den S-Eingang des FF rückgekoppelt, unabhängig von den Logikwerten nachfolgender Bits der für das zu überprüfende Adressenwort am Ausgang von ANDA erzeugten Bit-Sequenz. D.h., der Q-Ausgang bleibt bis zur Rücksetzung des FF bei Beinn der Überprüfung eines nächsten Adressenwortes auf "1", sodaß am Ende der Bewertung des letzten Segmentes des zu überprüfenden Adressenwortes am Q-Ausgang das Nicht-Akzeptanz anzeigende Signal vorhanden ist.

Bei der in Fig. 1 dargestellten Ausführungsform sind die einzelnen Filter einer jeden Filtergruppe nur für die Bewertung des der jeweiligen Filtergruppe zugehörigen Adressenwortsegments verfügbar. Wenn ein bestimmtes Segmentbitmuster in mehreren Adressenwortsegmenten der akzeptierbaren Adressenwörter vorkommt, kommt das Filter mit dem entsprechenden Filterinhalt in jeder dieser Filtergruppen vor, also mehrfach.

Es besteht aber auch die Möglichkeit, jedes Filter mit einem bestimmten Filterinhalt nur einmal vorzusehen, auch wenn das entsprechende Segmentbitmuster in verschiedenen Adressenwortsegmenten der akzeptierbaren Adressenwörter vorkommt. Kommt das dem Filterinhalt eines bestimmten Segmentfilters entsprechende Bitmuster in verschiedenen Segmenten der akzeptierbaren Adressenwörter vor, wird dieses Filter segmentübergreifend benutzt, indem es bei der Akzeptanzüberprüfung all jener Segmente aktiviert wird, in denen dieses Bitmuster vorkommen kann.

Eine derartige Ausführungsform wird nun anhand der Figuren 3 bis 8 erläutert.

Die Figuren 3 bis 6 zeigen die gleiche Adressenwortliste wie Fig. 2, und zwar mit der gleichen Segmentierung. In den Figuren 3 bis 6 sind mehrfach vorkommende Segmentbitmuster gekennzeichnet, und zwar in jeder dieser Figuren 3 bis 6 ein anderes mehrfach vorkommendes Segmentbitmuster. Aus den Figuren 3 bis 5 ist ersichtlich, daß die Segmentbitmuster "00", "11" und "01" je in drei Segmenten und in drei akzeptierbaren Adressenwörtern vorkommen. Gemäß Fig. 6 kommt das Segmentbitmuster "10" in zwei Segmenten zweier akzeptierbarer Adressenwörter vor. Eine Gesamtbetrachtung der Figuren 3 bis 6 zeigt, daß sich sämtliche akzeptierbaren Adressenwörter aus diesen vier Segmentbitmustern zusammensetzen lassen. Sieht man vier Filter mit den entsprechenden Filterinhalten vor, kann man daher alle vier akzeptierbaren Adressenwörter mit diesen vier Filtern auf Akzeptanz überprüfen.

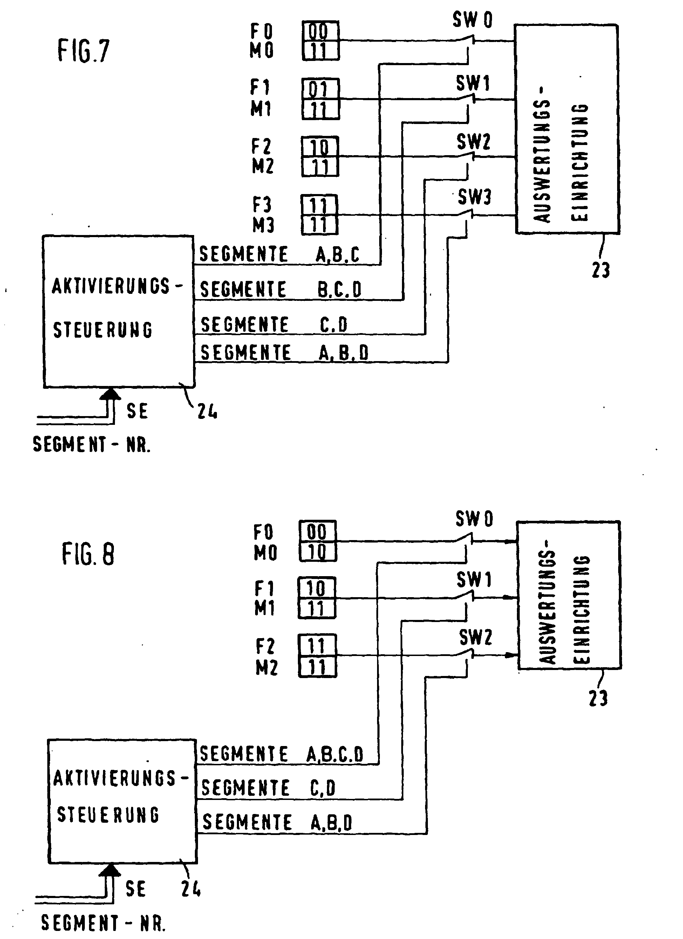

Fig. 7 zeigt eine entsprechende Schaltungsanordnung mit vier Filtern F0, F1, F2, F3, mit welchen sich das Vorkommen von Segmentbitmustern "00", "01", "10" bzw. "11" überprüfen läßt. Jedem dieser Filter ist eine Maske M0, M1, M2 bzw. M3 zugeordnet, die je das Maskenbitmuster "11" aufweisen. Dies bedeutet, daß keine Bitstelle der vier Filter F0 bis F3 bei der Akzeptanzprüfung ignoriert wird sondern daß eine Akzeptanz nur dann stattfindet, wenn ein Segmentbitmuster auftritt, das einem der Filtermuster exakt entspricht.

Wie die Ausführungsform der Fig. 1 umfaßt die in Fig. 7 gezeigte Ausführungsform eine Aktivierungssteuerung 24 und eine Auswertungseinrichtung 23. Die Ausgänge der Filter/Masken-Einheiten F0/M0, F1/M1, F2/M2 und F3/M3 sind je über einen Schalter SW0, SW1, SW2 bzw. SW3 mit je einem zugehörigen Eingang der Auswertungseinrichtung 23 verbunden. Die Schalter SW0 bis SW3 sind mittels der Aktivierungssteuerung 24 leitend steuerbar. Die Aktivierungssteuerung 24 erhält über einen Steuereingang SE Information darüber, welches Segment eines Adressenwortes gerade zu bewerten ist. Während eines jeden der Segmente A bis D werden diejenigen der Schalter SW0 bis SW3 leitend gesteuert, welche mit der Auswertungseinrichtung 23 diejenigen Filter verbinden, welche in dem jeweiligen Segment in allen akzeptierbaren Adressenwörtern vorkommen können.

Da das Segmentbitmuster "00" in den Segmenten A, B und C akzeptierbarer Adressenwörter vorkommen kann, wird Schalter SW0 während der Segmente A, B und C leitend gesteuert. Entsprechend den Vorkommnissen der Filterinhalte der Filter F1, F2 und F3 in den einzelnen Adressenwörtern sind der Schalter SW1 während der Segmente B, C, D, der Schalter SW2 während der Segmente C, D und der Schalter SW3 während der Segmente A, B, D leitend gesteuert.

Daraus, ob und welche der Filter während der einzelnen Segmente Akzeptanz melden, bewertet die Auswertungseinrichtung 23, ob jeweils ein akzeptierbares Adressenwort empfangen worden ist und, wenn ja, welches der akzeptierbaren Adressenwörter.

Fig. 8 zeigt eine Ausführungsform, die der in Fig. 7 gezeigten Ausführungsform sehr ähnlich ist, allerdings nur drei Filter/Masken-Einheiten F0/M0, F1/M1 und F2/M2 mit je einem zugehörigen Schalter SW0, SW1 bzw. SW2 aufweist. Während die Masken M1 und M2 einen Maskeninhalt "11" aufweisen, somit keine Bitstelle des zugehörigen Filters ignorieren, besitzt die Maske M0 den Maskeninhalt "10", so daß die erste Bitstelle "0" des Segmentfilters F0 nicht ignoriert wird, die zweite Bitstelle "0" dieses Filters jedoch ignoriert wird. Das heißt, von der Filter/Masken-Einheit F0/M0 werden die Bitmuster "00" und "01" akzeptiert. Daher werden von der in Fig. 8 gezeigten Ausführungsform nicht nur die in den Figuren 2 bis 6 gezeigten vier Adressenwörter akzeptiert sondern zusätzlich Adressenwörter, die an den in Fig. 3 markierten Stellen an Stelle des Segmentbitmusters "00" das Segmentbitmuster "01" aufweisen.

Während man bei der herkömmlichen Methode zur Akzeptanzprüfung der vier in Fig. 12 gezeigten akzeptierbaren Adressenwörter 32 Filterbitstellen benötigt, kommt man bei der in Fig. 7 gezeigten Ausführungsform mit lediglich acht Filterbitstellen für die Akzeptanzprüfung der gleichen vier akzeptierbaren Adressenwörter aus. Bei einer Maskierung gemäß Fig. 8 reichen hierfür sogar sechs Filterbitstellen aus. Noch bedeutsamer als diese erhebliche Einsparung an Filterbitstellen ist die Reduzierung der erforderlichen Wortleitungen, was, wie bereits erwähnt, eine gewaltige Einsparung an Chipfläche für die monolithische Integration einer solchen Adressenwortselektionsvorrichtung mit sich bringt.

In Fig. 9 wird eine Ausführungsform einer Übereinstimmungsüberprüfungsschaltung mit maskierten Filtern und mit einer Auswertungseinrichtung einer erfindungsgemäßen Adressenwortseleküonsvorrichtung gezeigt. Zur Vereinfachung sind Adressenwörter mit nur zwei Adressenwortsegmenten A und B mit Adressenbitstellen a0 und a1 bzw. a2 und a3 angenommen. Entsprechend ist ein Filter mit nur zwei Segmentfiltern mit je zwei Filterstellen f0 und f1 bzw. f2 und f3 und eine Maske mit nur zwei Segmentmasken mit je zwei Maskenstellen m0 und m1 bzw. m2 und m3 dargestellt.

Bei dieser Ausführungsform werden die zwei Adressenwortsegmente A und B nacheinander in ein Adressensegmentregister 21 geschoben, das zur Aufnahme je eines Adressenwortsegmentes mit je zwei Bitstellen zwei Registerstellen 21₁ und 21₂ mit je einem Registerstellenausgang aufweist. Für die insgesamt vier Bitstellen des Adressenwortes sind vier XOR-Gliedern XOR0, XOR1, XOR2 und XOR3 vorgesehen. Mit den beiden Registerstellenausgängen sind während der Speicherung des ersten Segmentes A die XOR-Glieder XOR0 und XOR1 und während der Speicherung des zweiten Segmentes B die XOR-Glieder XOR2 und XOR3 verbunden. Mittels XOR0 bis XOR1 werden die jeweiligen Inhalte der beiden Registerstellen mit den Inhalten in den entsprechenden Filterstellen miteinander auf Übereinstimmung oder Nicht-Übereinstimmung verglichen. Da ein XOR-Glied bekanntlich bei Übereinstimmung der ihm eingangsseitig zugeführten Logikwerte einen Ausgangslogikwert "0" und bei Nicht-Übereinstimmung einen Ausgangslogikwert "1" abgibt, besteht Übereinstimmung zwischen dem Bitmuster eines Segments und dem Filterinhalt eines entsprechenden Segmentfilters dann, wenn die Ausgänge der beiden zugehörigen XOR-Glieder den Logikwert "0" aufweisen.

Die Ausgangssignale der XOR-Glieder werden mit Hilfe von je einem UND-Glied AND0, AND1, AND2 bzw. AND3 einer Maskierung entsprechend den Logikwerten in den einzelnen Maskenstellen m0, m1 m2 bzw. m3, unterzogen. Findet sich in einer Maskenstelle der Logikwert "1" , hängt, der Ausgangslogikwert des entsprechenden UND-Gliedes vom Ausgangslogikwert des zugehörigen XOR-Gliedes ab. Befindet sich in einer Maskenstelle dagegen der Logikwert "0", erscheint am Ausgang des entsprechenden UND-Gliedes der Logikwert "0" unabhängig vom Ausgangslogikwert des entsprechenden XOR-Gliedes. Bei einem Logikwert "1" in einer Maskenstelle muß daher die entsprechende Bitstelle des entsprechenden Adressenwortsegments mit dem Inhalt der entsprechenden Filterstelle übereinstimmen, um akzeptiert zu werden. Bei einem Logikwert ."0" in einer Maskenstelle wird unabhängig davon, ob die zugehörige Bitstelle des entsprechenden Adressenwortsegments mit dem Inhalt der entsprechenden Filterstelle übereinstimmt oder nicht, Akzeptanz gemeldet, die Frage, ob das entsprechende Adressenwortbit mit dem Inhalt der entsprechenden Filterstelle übereinstimmt oder nicht, also ignoriert.

Bei der in Fig. 9 gezeigten Ausführungsform werden die Ausgangslogikwerte der beiden je einem Adressenwortsegment zugeordneten UND-Glieder direkt auf ein ODER-Glied OR1 bzw. OR2 gegeben. Wenn alle Ausgangslogikwerte der vier UND-Glieder Übereinstimmung signalisieren, werden jedem der beiden ODER-Glieder OR1 und OR2 nur Logikwerte "0" zugeführt, so daß am Ausgang eines jeden der ODER-Glieder OR1 und OR2 ein Logikwert "0" erscheint. Liefert auch nur eines der UND-Glieder einen Ausgangslogikwert "1", erscheint am Ausgang des entsprechenden ODER-Gliedes OR1 oder OR2 der Logikwert "1". Somit signalisiert eine Logikwert "0" am Ausgang eines jeden der ODER-Glieder OR1 und OR2 Akzeptanz des überprüften Adressenwortes, während ein Logikwert "1" am Ausgang mindestens eines der beiden ODER-Glieder Nicht-Akzeptanz des überprüften Adressenwortes signalisiert.

Die Gesamtauswertung am Ende eines Adressenwortes kann parallel in der im Zusammenhang mit Fig. 1a erläuterten Methode erfolgen. Hierfür kann man beispielsweise die zeitlich nacheinander auftretenden Ausgangs-Logikwerte der beiden ODER-Glieder OR1 und OR2 in einem Schieberegister zwischenspeichern und am Ende des letzten Segmentes des zu überprüfenden Adressenwortes mit dem ODER-Glied ORA auswerten.

Bei der Ausführungsform in Fig. 9 sind jeder Filterstelle ein eigenes XOR-Glied und jeder Maskenstelle ein eigenes UND-Glied zugeordnet und erfolgt eine umschaltbare segmentweise Verbindung der beiden Registerstellenausgänge zunächst mit XOR0 und XOR1 und danach mit XOR2 und XOR3.

Im Vergleich zu der in Fig. 13 dargestellten bekannten Methode kommt man bei der erfindungsgemäßen Methode der segmentweisen Verarbeitung entsprechend den Ausführungsformen der Fig. 1, 7 und 8, insbesondere bei der segmentübergreifenden Filterbenutzungsmethode bei der in Fig. 7 dargestellten Ausführungsform, insgesamt mit wesentlich weniger Filterstellen aus und mit wesentlich weniger Wortleitungen, was zu den bereits erwähnten Vorteilen führt. Außerdem kann man mit erheblich weniger XOR-Gliedern auskommen. Da Schalter, wie sie einerseits zwischen den Filterausgängen und der Auswertungseinrichtung 23 und andererseits in der Aktivierungssteuerung vorgesehen sind, wesentlich weniger Schaltungsaufwand benötigen als XOR-Glieder, führt die erfindungsgemäße Akzeptanzüberprüfüngsmethode insgesamt zu erheblich geringerem Schaltungsaufwand als die herkömmliche Akzeptanzüberprüfungsmethode, neben der beträchtlichen Einsparung von Chipfläche wegen der geringeren Anzahl erforderlicher Wortleitungen.

## Patentansprüche

1. Vorrichtung zur Selektion von Adressenwörtem, die je n Bitstellen aufweisen und der Adressierung von m verschiedenen Empfangsstellen (E1, E2, ... Em) einer digitalen Nachrichtenübertragungseinrichtung dienen, in mindestens einer der Empfangsstellen, mit einer digitalen Akzeptanzeinrichtung, mittels welcher für die betrachtete Empfangsstelle (E1, E2, ... Em) akzeptierbare Adressenwörter (ADR0, ADR1, ADR2, ADR3) selektierbar sind und die aufweist:
a) eine Adressenwortsegmentiereinrichtung, mittels welcher jedes von der Empfangsstelle (E1, E2, ... Em) empfangene Adressenwort in s Adressenwortsegmente (A, B, C, D) mit je b Segmentbitstellen unterteilbar ist, wobei b = n/s und n ein ganzzahliges Vielfaches von s ist;
b) z digitale Segmentfilter (FA1 bis FD3; F0 bis F3), deren Eingängen jeweils ein Adressenwortsegment zuführbar ist, wobei mittels eines jeden Segmentfilters jeweils ein Adressenwertsegment auf Übereinstimmung mit einem vorbestimmten Segmentbitmuster überprüfbar und am Ausgang des jeweiligen Segmentfilters ein Filterausgangssignal abnehmbar ist, bei dem es sich je nach dem Überprüfungsergebnis um ein Übereinstimmungssignal oder ein Nicht-Übereinstimmungssignal handelt;
c) eine Aktivierungseinrichtung (24, SWA1 bis SWD3; 24, SW0 bis SW3), mittels welcher während der Zeitdauer des jeweils zu bewertenden Adressenwortsegments (A, B, C, D) diejenigen Segmentfilter (FA1 bis FD3; F0 bis F3), welche auf solche Segmentbitmuster überprüfen, welche in den für die betrachtete Empfangsstelle akzeptierbaren Adressenwörtern in dem jeweils zu bewertenden Adressenwortsegment vorkommen können, aktivierbar sind; und
d) eine Auswertungseinrichtung (23; OR1, OR2; ANDA, SRA, ORA1;ANDA,ORA2,FF), mittels welcher die Ausgangssignale der für die Bewertung eines Adressenwortes jeweils aktivierten Segmentfilter hinsichtlich des Vorliegens eines für die betrachtete Empfangsstelle akzeptierbaren Adressenwortes auswertbar sind.

2. Vorrichtung nach Anspruch 1, bei welcher s Segmentfiltergruppen (FA1, FB1 bis FB3, FC1 und FC2, FD1 bis FD3) mit je mindestens einem Segmentfilter vorgesehen sind, wobei
die Anzahl der Segmentfilter pro Segmentfiltergruppe von der Anzahl der für das zugehörige Adressenwortsegment akzeptierbaren Segmentbitmuster abhängt;
jede Segmentfiltergruppe einem vorbestimmten Adressenwortsegment des jeweiligen Adressenwortes zugeordnet ist;
mittels der Aktivierungseinrichtung jeweils sämtliche Segmentfilter nur einer Segmentfiltergruppe gleichzeitig aktivierbar sind; und
das jeweils zu überprüfende Adressenwortsegment den Eingängen aller Segmentfilter zuführbar ist.

3. Vorrichtung nach Anspruch 1, bei welcher
das jeweils zu überprüfende Adressenwortsegment den Eingängen aller Segmentfilter (F0 bis F3) zuführbar ist
und mittels der Aktivierungseinrichtung (24, SW0 bis SW3) während des Auftretens eines zu überprüfenden Adressenwortsegmentes jeweils alle diejenigen Segmentfilter aller vorhandener Segmentfilter aktivierbar sind, welche auf das Auftreten von Segmentbitmustern überprüfen, die in diesem Adressenwortsegment aller für die betrachtete Empfangsstelle akzeptierbarer Adressenwörter vorkommen können.

4. Vorrichtung nach Anspruch 2 oder 3, bei welcher für jedes Segmentbitmuster, das in den für die betrachtete Empfangsstelle akzeptierbaren Adressenwörtern vorkommen kann, je mindestens ein Segmentfilter vorgesehen ist.

5. Vorrichtung nach Anspruch 2 oder 3, bei welcher nicht für jedes Segmentbitmuster, das in den für die betrachtete Empfangsstelle akzeptierbaren Adressenwörtern vorkommen kann, ein Segmentfilter vorgesehen ist und für mindestens einen Teil der Segmentfilter (F0 bis F2) je eine Maske (M0 bis M2) vorgesehen ist, mittels welcher festlegbar ist, ob die Bewertung, welche das zu der Maske gehörende Segmentfilter bei der Überprüfung einer bestimmten Bitstelle eines Adressenwortsegmentes durchführt, ignoriert werden soll oder nicht.

6. Vorrichtung nach einem der Ansprüche 1 bis 5,
mit einem Segmentschieberegister (21) mit b Registerstellen (21₁, 21₂), in welches die Bits des jeweils zu überprüfenden Adressenwortsegmentes schiebbar sind;
bei welcher jedes Segmentfilter aufweist:
ein Filter (f0, f1, f2, f3) mit s Segmentfiltern, die je b Registerstellen (f0, f1; f2, f3) zur Speicherung des zu dem jeweiligen Filtersegment gehörenden Bitmusters aufweisen;
und n XOR-Glieder (XOR1 bis XOR3) zur bitstellenweisen XOR-Verknüpfung des Bitmusters des jeweils im Segmentschieberegister (21) gespeicherten Adressenwortsegmentes mit dem im je zugehörigen Segmentfilter gespeicherten Segmentbitmuster;
wobei zwischen den Registerstellen des Segmentschieberegisters (21) und den XOR-Gliedern eine Umschalteinrichtung angeordnet ist, mittels welcher Registerstellenausgänge der Registerstellen des Segmentschieberegisters (21) während eines jeden Adressenwortsegmentes mit den zugehörigen der XOR-Glieder verbindbar sind;
und bei welcher die Auswertungseinrichtung (23) ein ODER-Glied (OR1, OR2) pro Adressenwortsegment aufweist, von denen jedes b Eingänge besitzt, die je mit dem Ausgang eines derjenigen XOR-Glieder verbunden sind, welche zu dem jeweiligen Adressenwortsegment gehören,
wobei von den Ausgangssignalen der ODER-Glieder (OR1, OR2) ableitbar ist, ob das jeweiligen Adressenwort akzeptierbar ist oder nicht.

7. Vorrichtung nach Anspruch 6 mit Masken nach Anspruch 5, bei welcher jede Maske aufweist:
ein Maskenregister (m0, m1, m2, m3) mit s Maskenregistersegmenten mit je b Maskenspeicherstellen zur Speicherung eines Maskierungsbitmusters;
und n UND-Glieder (AND1 bis AND4) mit je zwei Eingängen und einem Ausgang, wobei jeweils einer der Eingänge mit dem Ausgang eines der XOR-Glieder, der zweite Eingang mit dem Ausgang einer Maskenspeicherstelle und der Ausgang mit einem der Eingänge der ODER-Glieder (OR1 , OR2) gekoppelt ist.

8. Vorrichtung nach einem der Ansprüche 1 bis 7, bei welcher
die Aktivierungseinrichtung eine steuerbare Schaltereinrichtung (SWA1 bis SWD3; SW0 bis SW2) aufweist, die zwischen die Segmentfilter (FA1 bis FD3; F0 bis F3) und die Auswertungseinrichtung (23) geschaltet ist und die im nicht aktivierenden Schaltzustand an die Auswertungseinrichtung (23) einen Logikwert liefert, welchem die Bedeutung Nicht-Akzeptanz zugeordnet ist, und die im aktivierenden Schaltzustand den von dem zugehörigen Segmentfilter gelieferten Logikwert an die Auswertungseinrichtung (23) weitergibt.

9. Vorrichtung nach einem der Ansprüche 1 bis 8,
mit einer Übereinstimmungsüberprüfungsschaltung,
bei welcher die Auswertungseinrichtung für eine parallele Akzeptanzüberprüfungsauswertung der segmentweise nacheinander erhaltenen Akzeptanzüberprüfungsergebnisse für die einzelnen Adressenwortsegmente aufweist:
eine Auswertungs-UND-Verknüpfungsschaltung (ANDA) mit sovielen Eingängen, wie der Auswertungseinrichtung (23) am Ende einer jeden Adressenwortsegmentüberprüfung parallele Überprüfungsergebnissignale zugeführt werden; ,
ein Auswertungsschieberegister (SRA), das einen mit einem Ausgang der Auswertungs-UND-Verknüpfungsschaltung (ANDA) verbundenen Dateneingang und pro Adressenwortsegment eine Registerstelle mit je einem Registerstellenausgang aufweist;
und eine Auswertungs-ODER-Verknüpfungsschaltung (ORA1), die pro Adressenwortsegment einen Eingang aufweist, von denen jeder mit einem der Registerstellenausgänge verbunden ist, und die einen Ausgang aufweist, von dem ein Akzeptanzauswertungsergebnissignal für das jeweilige Adressenwort abnehmbar ist.

10. Vorrichtung nach einem der Ansprüche 1 bis 8,
mit einer Übereinstimmungsüberprüfungsschaltung,
bei welcher die Auswertungseinrichtung für eine sequentielle Akzeptanzüberprüfungsauswertung der segmentweise nacheinander erhaltenen Akzeptanzüberprüfungsergebnisse für die einzelnen Adressenwortsegmente aufweist:
eine Auswertungs-UND-Verknüpfungsschaltung (ANDA) mit sovielen Eingängen, wie der Auswertungseinrichtung (23) am Ende einer jeden Adressenwortsegmentübeiprüfung parallele Überprüfungsergebnissignale zugeführt werden;
eine Auswertungs-ODER-Verknüpfungsschaltung (ORA2) mit zwei Eingängen (E1, E2), von denen ein erster (E1) mit einem Ausgang der Auswertungs-UND-Verknüpfungsschaltung (ANDA) verbunden ist;
und ein getaktetes RS-Flipflop (FF), das einen mit einem Ausgang der Auswertungs-ODER-Verknüpfungsschaltung (ORA2) verbundenen Setz-Eingang (S), einen Takteingang (CLK), dem ein einem Adressenwortsegmenttakt entsprechendes Taktsignal zuführbar ist, einen Rücksetzeingang (R) und einen nicht invertierenden Flipflop-Ausgang (Q) aufweist, wobei der Flipflop-Ausgang mit dem zweiten Eingang (E2) der Auswertungs-ODER-Verknüpfungsschaltung verbunden ist, von dem Flipflop-Ausgang ein Akzeptanzauswertungsergebnissignal für das jeweilige Adressenwort abnehmbar ist und dem Rücksetz-Eingang (R) vor der Akzeptanzübeiprüfung eines Adressenwortes ein Rücksetzsignal zuführbar ist, welches am Flipflop-Ausgang ein Akzeptanz signalisierendes Akzeptanzauswertungsergebnissignal hervorruft.

11. Verfahren zur Selektion von Adressenwörtern, die je n Bitstellen aufweisen und der Adressierung von m verschiedenen Empfangsstellen einer digitalen Nachrichtenübertragungseinrichtung dienen, in mindestens einer der Empfangsstellen,
bei welchem:
jedes Adressenwort in s Adressenwortsegmente (A, B, C, D) mit je b Segmentbitstellen unterteilt wird wobei b=n/s und n ein gonzzahliges Vielfaches von s ist;
die einzelnen Adressenwortsegmente je darauf überprüft werden, ob sie mit einem der für das jeweilige Segment aktivierten Segmentbitmuster, die in dem jeweiligen Adressenwortsegment eines der für die betrachtete Empfangsstelle akzeptierbaren Adressenwörter (ADR0 bis ADR3) vorkommen können, übereinstimmen;
und nach Überprüfung aller Adressenwortsegmente eines empfangenen Adressenwortes anhand der Überprüfungsergebnisse für die einzelnen Adressenwortsegmente eine Bewertung dahingehend durchgeführt wird, ob es sich bei dem jeweils empfangenen Adressenwort um ein für die betrachtete Empfangsstelle akzeptierbares Adressenwort handelt oder nicht.

12. Verfahren nach Anspruch 11, bei welchem bei der Überprüfung der einzelnen Adressenwortsegmente auf das Vorliegen akzeptierbarer Segmentbitmuster einzelne Bits des Segmentbitmusters maskiert werden, derart, daß für einzelne Bitstellen des Adressenwortsegmentes festgelegt wird, ob bei der Überprüfung dieser Bitstelle nur ein vorbestimmter Binärwert oder beliebige Binärwerte akzeptiert werden sollen.

## Claims

1. A device for the selection of address words each having n bit locations and serving for addressing m different receiving locations (E1, E2, ... Em) of a digital communications means, in at least one of the receiving locations, including a digital acceptance means through which address words (ADR0, ADR1, ADR2, ADR3) can be selected that are acceptable for the receiving location in consideration, and which comprises:
a) an address word segmenting means through which each address word received by the receiving location (E1, E2, ... Em) can be subdivided into s address word segments (A, B, C, D) with b segment bit locations each, wherein b = n/s and n is an integral multiple of s;
b) z digital segment filters (FA1 to FD3; F0 to F3) whose inputs can each be fed with an address word segment, with each segment filter having the function of examining one address word segment each with respect to conformity with a predetermined segment bit pattern, and a filter output signal being available at the output of the respective segment filter, which in accordance with the examination result, is either a conformity signal or a non-conformity signal;
c) an activation means (24, SWA1 to SWD3; 24, SW0 to SW3) through which those segment filters (FA1 to FD3; F0 to F3) can be activated during the duration of the respective address word segment (A, B, C, D) to be assessed which carry out an examination with respect to such segment bit patterns which can occur in the address words acceptable for the receiving location in consideration, in the respective address word segment to be assessed; and
d) an evaluation means (23; OR1, OR2; ANDA, SRA, ORA1; ANDA, ORA2, FF) through which the output signals of the respective segment filters activated for the assessment of an address word can be evaluated with respect to the presence of an address word that is acceptable for the receiving location in consideration.

2. A device according to claim 1,
in which s segment filter groups (FA1, FB1 to FB3, FC1 and FC2, FD1 to FD3) are provided having at least one segment filter each,
with the number of segment filters per segment filter group being dependent on the number of the segment bit patterns that are acceptable for the associated address word segment;
each segment filter group being associated with a predetermined address word segment of the respective address word;
all segment filters of only one segment filter group each being adapted to be activated simultaneously by means of the activation means; and
the respective address word segment to be examined being adapted to be fed to the inputs of all segment filters.

3. A device according to claim 1,
in which the respective address word segment to be examined is adapted to be supplied to the inputs of all segment filters (F0 to F3),
and by means of the activation means (24, SW0 to SW3), during occurrence of an address word segment to be examined, all those segment filters of all segment filters provided can be activated which examine the occurrence of segment bit patterns that can occur in this address word segment of all address words acceptable for the receiving location in consideration.

4. A device according to claim 2 or 3,
in which at least one segment filter each is provided for each segment bit pattern that can occur in the address words acceptable for the receiving location in consideration.

5. A device according to claim 2 or 3,
in which a segment filter is provided not for each segment bit pattern that can occur in the address words acceptable for the receiving location in consideration, and for at least part of the segment filters (F0 to F2) one mask (M0 to M2) each is provided, by means of which it can be determined whether the assessment carried out by the segment filter belonging to the mask upon examination of a specific bit location of an address word segment, is to be ignored or not.

6. A device according to any of claims 1 to 5,
comprising a segment shift register (21) having b register locations (211, 212), in which the bits of the respective address word segment to be examined can be introduced;
with each segment filter comprising:
a filter (f0, f1, f2, f3) having s segment filters each having b register locations (f0, f1; f2, f3) for storing the bit pattern belonging to the respective filter segment;
and n XOR elements (XOR1 to XOR3) for the bit-location-wise XOR linking of the bit pattern of the respective address word segment stored in the segment shift register (21) with the segment bit pattern stored in the respectively associated segment filter;
the register locations of the segment shift register (21) and the XOR elements having disposed therebetween a switching means through which register location outputs of the register locations of segment shift register (21) can be connected to the associated ones of the XOR elements during each address word segment;
and with the evaluation means (23) having one OR element (OR1, OR2) per address word segment, each thereof having b inputs that are each connected to the output of one of those XOR elements that belong to the respective address word segment,
in which it is possible to derive from the output signals of the OR elements (OR1, OR2) whether the respective address word is acceptable or not.

7. A device according to claim 6 having masks according to claim 5, with each mask comprising:
a mask register (m0, m1, m2, m3) having s mask register segments with b mask storage locations each for storing a mask bit pattern;
and n AND elements (AND1 to AND4) each having two inputs and one output, with one of the inputs being coupled with the output of one of the XOR elements, the second input being coupled with the output of a mask storage location and the output being coupled with one of the inputs of the OR elements (OR1, OR2).

8. A device according to any of claims 1 to 7,
in which the activation means comprises a controllable switch means (SWA1 to SWD3; SW0 to SW2) connected between the segment filters (FA1 to FD3; F0 to F3) and the evaluation means (23) and, in the non-activating switching state, delivering to the evaluation means (23) a logic value having the meaning of non-acceptance associated therewith, and in the activating switching state, passing the logic value delivered from the associated segment filter, on to the evaluation means (23).

9. A device according to any of claims 1 to 8,
comprising a conformity examination circuit,
in which the evaluation means for a parallel acceptance examination evaluation of the acceptance examination results obtained in segmentwise, successive manner for the individual address word segments comprises:
an evaluation AND gate circuit (ANDA) having as many inputs as parallel examination result signals are fed to the evaluation means (23) at the end of each address word segment examination;
an evaluation shift register (SRA) having a data input connected to an output of the evaluation AND gate circuit (ANDA), and having for each address word segment a register location with one register location output each;
and an evaluation OR gate circuit (ORA1) having one input per address word segment, each of said inputs being connected to one of the register location outputs, and having an output from which an acceptance evaluation result signal for the respective address word is available.

10. A device according to any of claims 1 to 8,
comprising a conformity examination circuit,
in which the evaluation means for a sequential acceptance examination evaluation of the acceptance examination results received in segmentwise, successive manner for the individual address segments comprises:
an evaluation AND gate circuit (ANDA) having as many inputs as parallel examination result signals are fed to the evaluation means (23) at the end of each address word segment examination;
an evaluation OR gate circuit (ORA2) having two inputs (E1, E2), a first one (E1) thereof being connected to an output of the evaluation AND gate circuit (ANDA);
and a clocked RS flipflop (FF) having a setting input (S) connected to an output of the evaluation AND gate circuit (ORA2), a clock input (CLK) adapted to be fed with a clock signal corresponding to an address word segment clock, a resetting input (R) and non-inverting flipflop output (Q), the flipflop output being connected to the second input (E2) of the evaluation OR gate circuit, an acceptance evaluation result signal for the respective address word being available from the flipflop output, and the resetting input (R), prior to the acceptance examination of an address word, being adapted to be fed with a resetting signal causing at the flipflop output an acceptance evaluation result signal signalling acceptance.

11. A method of selecting address words each having n bit locations and serving for addressing m different receiving locations of a digital communications means, in at least one of the receiving locations,
wherein:
each address word is subdivided into s address word segments (A, B, C, D), each having b segment bit locations, wherein b=n/s and n is an integral multiple of s;
the individual address word segments each are examined with respect to whether they are in conformity with one of the segment bit patterns that are activated for the respective segment and can occur in the respective address word segment of one of the address words (ADR0 to ADR3) that are acceptable for the receiving location in consideration;
and after examination of all address word segments of an address word received, an assessment for the individual address word segments is performed on the basis of the examination results, to the effect whether or not the respective address word received is an address word that is acceptable for the receiving location in consideration.

12. A method according to claim 11,
in which the examination of the individual address word segments with respect to the presence of acceptable segment bit patterns includes masking of individual bits of the segment bit pattern such that it is determined for individual bit locations of the address word segment whether only a predetermined binary value or arbitrary binary values are to be accepted in the examination of this bit location.

## Revendications

1. Dispositif de sélection de mots d'adresse présentant chacun n positions binaires et servant à l'adressage de m positions de réception (E1, E2, ... Em) différentes d'un dispositif de transmission de données numériques dans l'une au moins des positions de réception,
avec un dispositif d'acceptation numérique au moyen duquel des mots d'adresse (ADR0, ADR1, ADR2, ADR3) acceptables pour la position de réception (E1, E2, ... Em) considérée peuvent être sélectionnés et qui présente :
a) un dispositif de segmentation de mots d'adresse au moyen duquel chaque mot d'adresse reçu par la position de réception (E1, E2, ... Em) peut être subdivisé en s segments de mot d'adresse (A, B, C, D) ayant chacun b positions binaires de segment, où b = n/s et n est un multiple entier de s ;
b) z filtres de segments numériques (FA1 à FD3 ; F0 à F3) aux entrées de chacun desquels un segment de mot d'adresse peut être appliqué, un segment de mot d'adresse pouvant respectivement être contrôlé au moyen de chaque filtre de segment afin de vérifier sa concordance avec un profil binaire de segment prédéterminé et un signal de sortie de filtre pouvant être récupéré à la sortie du filtre de segment correspondant, ce signal étant, selon le résultat du contrôle, un signal de concordance ou un signal de non concordance ;
c) un dispositif d'activation (24, SWA1 à SWD3 ; 24, SW0 à SW3) au moyen duquel peuvent être activés, pendant la durée de chaque segment de mot d'adresse (A, B, C, D) à évaluer, les filtres de segments (FA1 à FD3 ; F0 à F3) qui contrôlent les profils binaires de segments qui peuvent être présents dans les mots d'adresse acceptables pour la position de réception considérée dans le segment de mot d'adresse à contrôler en question ; et
d) un dispositif d'évaluation (23; OR1, OR2; ANDA, SRA, ORA1; ANDA, ORA2, FF) au moyen duquel les signaux de sortie des différents filtres de segments activés pour l'évaluation d'un mot d'adresse peuvent être évalués en fonction de la présence d'un mot d'adresse acceptable pour la position de réception considérée.

2. Dispositif selon la revendication 1, dans lequel il est prévu s groupes de filtres de segments (FA1, FB1 à FB3, FC1 et FC2, FD1 à FD3) avec chacun au moins un filtre de segment, et dans lequel
le nombre des filtres de segments par groupe de filtres de segments est fonction du nombre des profils binaires de segments acceptables pour le segment de mot d'adresse concerné ;
chaque groupe de filtres de segments est affecté à un segment de mot d'adresse prédéterminé du mot d'adresse correspondant ;
l'ensemble des filtres de segments d'un seul groupe de filtres de segments peut être activé en même temps au moyen du dispositif d'activation ; et
chaque segment de mot d'adresse à contrôler peut être appliqué aux entrées de tous les filtres de segments.

3. Dispositif selon la revendication 1, dans lequel
chaque segment de mot d'adresse à contrôler peut être appliqué aux entrées de tous les filtres de segments (F0 à F3) ; et
pendant l'apparition d'un segment de mot d'adresse à contrôler, tous ceux des filtres de segments, parmi tous les filtres de segments disponibles, qui contrôlent chacun l'apparition de profils binaires dans ceux des segments susceptibles d'être présents dans ce segment de mot d'adresse parmi tous les mots d'adresse acceptables pour la position de réception considérée peuvent être activés au moyen du dispositif d'activation (24, SW0 à SW3).

4. Dispositif selon la revendication 2 ou la revendication 3, dans lequel il est prévu au moins un filtre de segment pour chaque profil binaire de segment susceptible d'être présent dans les mots d'adresse acceptables pour la position de réception considérée.

5. Dispositif selon la revendication 2 ou la revendication 3, dans lequel il n'est pas prévu un filtre de segment pour chaque profil binaire de segment susceptible d'être présent dans les mots d'adresse acceptables pour la position de réception considérée et, pour au moins une partie des filtres de segments (F0 à F2), il est prévu un masque (M0 à M2) respectif au moyen duquel il est possible de déterminer si l'évaluation effectuée par le filtre de segment correspondant au masque lors du contrôle d'une position binaire donnée d'un segment de mot d'adresse doit être ignorée ou non.

6. Dispositif selon l'une des revendications 1 à 5,
avec un registre à décalage de segments (21) avec b positions de registre (211, 212), dans lequel les bits de chaque segment de mot d'adresse à contrôler peuvent être décalés ;
dans lequel chaque filtre de segment présente :
un filtre (f0, f1, f2, f3) avec s filtres de segments présentant chacun b positions de registre (f0, f1 ; f2, f3) pour stocker le profil binaire correspondant à chaque segment de filtre ;
et n portes OU Exclusif XOR (XOR1 à XOR3) pour le chaînage en OU Exclusif en fonction de la position binaire du profil binaire de chaque segment de mot d'adresse stocké dans le registre à décalage de segments (21) avec le profil binaire de segment stocké dans le filtre de segment correspondant ;
dans lequel est disposé, entre les positions de registre du registre à décalage de segments (21) et les portes OU Exclusif, un dispositif de commutation au moyen duquel des sorties de positions de registre des positions de registre du registre de segments à décalage (21) peuvent être reliées pendant chaque segment de mot d'adresse avec la porte OU Exclusif correspondante ;
et dans lequel le dispositif d'évaluation (23) présente pour chaque segment de mot d'adresse une porte OU (OR1, OR2) dont chacune possède des entrées b qui sont reliées chacune à la sortie d'une des portes OU Exclusif correspondant au segment de mot d'adresse concerné,
dans lequel il est possible de déduire à partir des signaux de sortie des portes OU (OR1, OR2) si le mot d'adresse concerné est acceptable ou non.

7. Dispositif selon la revendication 6, avec des masques selon la revendication 5, dans lequel chaque masque présente :
un registre de masques (m0, m1, m2, m3) avec s segments de registre de masques contenant chacun b positions de stockage de masques pour mémoriser un profil binaire de masquage ;
et n portes ET (AND 1 à AND4) avec chacune deux entrées et une sortie, l'une des entrées étant couplée à la sortie de l'une des portes OU Exclusif, la deuxième entrée à la sortie d'une position de stockage de masque et la sortie à l'une des entrées des portes OU (OR1, OR2).

8. Dispositif selon l'une des revendications 1 à 7, dans lequel le dispositif d'activation présente un dispositif de commutation commandable (SWA1 à SWD3 ; SW0 à SW2) qui est inséré entre les filtres de segments (FA1 à FD3 ; F0 à F3) et le dispositif d'évaluation (23) et qui, dans l'état non activé, fournit au dispositif d'évaluation (23) une valeur logique à laquelle la signification de non acceptation est affectée et, à l'état activé, transmet la valeur logique fournie par le filtre de segment correspondant au dispositif d'évaluation (23).

9. Dispositif selon l'une des revendications 1 à 8, avec un circuit de contrôle de concordance, dans lequel le dispositif d'évaluation, pour une évaluation en parallèle du contrôle d'acceptation des résultats du contrôle d'acceptation reçus à la suite les uns des autres par segments pour les différents segments de mot d'adresse, présente :
un circuit logique ET d'évaluation (ANDA) avec autant d'entrées qu'il y a de signaux de résultats de contrôle en parallèle envoyés au dispositif d'évaluation (23) à la fin de chaque contrôle de segment de mot d'adresse ;
un registre à décalage d'évaluation (SRA) présentant une entrée de données reliée à une sortie du circuit logique ET d'évaluation (ANDA) et, pour chaque segment de mot d'adresse, une position de registre avec chacune une sortie de position de registre ;
et un circuit logique OU d'évaluation (ORA1) qui présente pour chaque segment de mot d'adresse une entrée dont chacune est reliée à l'une des sorties de positions de registre et qui présente une sortie au niveau de laquelle un signal de résultat d'évaluation d'acceptation peut être récupéré pour le mot d'adresse concerné.

10. Dispositif selon l'une des revendications 1 à 8, avec un circuit de contrôle de concordance,
dans lequel le dispositif d'évaluation, pour une évaluation séquentielle du contrôle d'acceptation des résultats de contrôle d'acceptation reçus à la suite les uns des autres par segments pour les différents segments de mot d'adresse, présente :
un circuit logique ET d'évaluation (ANDA) avec autant d'entrées qu'il y a de signaux de résultat de contrôle en parallèle envoyés au dispositif d'évaluation (23) à la fin de chaque contrôle de segment de mot d'adresse ;
un circuit logique OU d'évaluation (ORA2) avec deux entrées (E1, E2) dont une première entrée (E1) est reliée à une sortie du circuit logique ET d'évaluation (ANDA) ;
et une bascule RS cadencée (FF) qui présente une entrée de positionnement (S) reliée à une sortie du circuit logique OU d'évaluation (ORA2), une entrée d'horloge (CLK) à laquelle un signal de synchronisation correspondant à une synchronisation de segment de mot d'adresse peut être appliqué, une entrée de repositionnement (R) et une sortie de bascule non inverseuse (Q), dans lequel la sortie de la bascule est reliée à la deuxième entrée (E2) du circuit logique OU d'évaluation, un signal de résultat d'évaluation de l'acceptation pour le mot d'adresse concerné peut être récupéré à la sortie de la bascule et un signal de repositionnement générant à la sortie de la bascule un signal de résultat d'évaluation d'acceptation signalant une acceptation peut être appliqué à l'entrée de repositionnement (R) avant le contrôle d'acceptation d'un mot d'adresse.

11. Procédé de sélection de mots d'adresse présentant chacun n positions binaires et servant à l'adressage de m positions de réception différentes d'un dispositif de transmission de données numériques dans l'une au moins des positions de réception, dans lequel :
chaque mot d'adresse est subdivisé en s segments de mot d'adresse (A, B, C, D) ayant chacun b positions binaires de segment, où b = n/ s et n est un multiple entier de s ;
chacun des segments de mot d'adresse sont contrôlés afin de déterminer s'ils concordent avec un des profils binaires de segment, activés pour le segment concerné, qui peuvent apparaître dans chaque segment de mot d'adresse dans un des mots d'adresse (ADR0 à ADR3) acceptables pour la position de réception considérée ;
et, après contrôle de tous les segments de mot d'adresse d'un mot d'adresse reçu, on effectue à partir des résultats de contrôle pour les différents segments de mot d'adresse une évaluation afin de déterminer si le mot d'adresse reçu est un mot d'adresse acceptable ou non pour la position de réception considérée.

12. Procédé selon la revendication 11, dans lequel, lors du contrôle des différents segments de mot d'adresse pour déterminer la présence de profils binaires de segments acceptables, les différents bits du profil binaire de segment sont masqués de façon à déterminer, pour les différentes positions binaires dans le segment de mot d'adresse, si seule une valeur binaire prédéterminée ou si des valeurs binaires quelconques peuvent être acceptées lors du contrôle de cette position binaire.
